# EUROPEAN PATENT APPLICATION

(11) **EP 1 719 632 A1**
(43) Date of publication of application: **08.11.2006**
(21) Application number: 05719384.9
(22) Date of filing: 22.02.2005
(51) Int. Cl.: B41J 21/00, B41J 29/38, G06F 3/12, B41J 3/36

(54) **LABEL PRINTER**

(30) Priority: 24.02.2004 JP 2004048822
(71) Applicant: MAX CO., LTD., Chuo-ku, Tokyo 103-8502 (JP)
(72) Inventor: UCHIYAMA, Yasuyuki c/o MAX CO., LTD., Tokyo 103-8502 (JP); TAHARA, Shosaku c/o MAX CO., LTD., Tokyo 103-8502 (JP); SANO, Chizuo c/o MAX CO., LTD., Tokyo 103-8502 (JP); YAMAZAKI, Akimitsu c/o MAX CO., LTD., Tokyo 103-8502 (JP)
(74) Representative: Samson & Partner
(86) International application number: PCT/JP2005/002809
(87) International publication number: WO 2005/080086

(57) **Abstract**

A first editing application is prepared in a label printer 1 in order to expand data into substantially the same format as that displayed on a display 3 of a computer 2 and print the data expanded on a label L even where the computer 2 is not connected to the label printer 1. If the computer 2 is connected to the label printer 1, a second editing application prepared in the computer 2 is employed. On the other hand, if the computer 2 is not connected to the label printer 1, the first editing application is employed in order to expand the data into substantially the format as that displayed on the display 3 of the computer 2 and print the data expanded on the label L.

## Description

### Technical Field:

This invention relates to a label printer, and more particularly to a label printer capable of printing data on a label in substantially the same format as that displayed on a display of a computer even in a place where the computer cannot be connected to the label printer, and capable of printing the data expanded at a high speed on the label in a place where the computer can be connected to the label printer.

### Background Art:

There is a previously known label printer for printing data on a plurality of labels pasted on a roll paper in a reel shape. An example of these kinds of label printers is disclosed in e.g. JP-A-2003-026134.

Some label printers for printing data on the label are designed so as to be connectable to a computer. In a conventional label printer designed so as to be connectable to the computer, where printing is executed in a state connected to the computer, an editing application prepared in the computer is employed. Specifically, the data edited by the editing application of the computer are previously displayed on a display of the computer. Next, when a printing command is issued by an operator, in the computer, the data are expanded into substantially the same format as that displayed on the display of the computer and the data thus expanded are sent to the label printer through a connecting cable. Further, in the label printer, the data are printed on the label in substantially the same format as displayed on the display of the computer.

On the other hand, where printing is executed in a state not connected to the computer, the label printer cannot receive the data from the computer through the connecting cable. Therefore, in the conventional label printer, when the data are edited by the editing application of the computer, first, the data edited are stored in a storage medium. Next, when printing should be executed, the storage medium is set in the label printer and the data stored in the storage medium are read out. However, the conventional label printer does not have a data expanding function possessed by the editing application of the computer. Therefore, in the conventional label printer, the data read out from the storage medium could not expanded into substantially the same format as that displayed on the display of the computer. As a result, in the conventional computer, where the computer cannot be connected to the label printer, the data could not be printed on the label in substantially the same format as that displayed on the display of the computer.

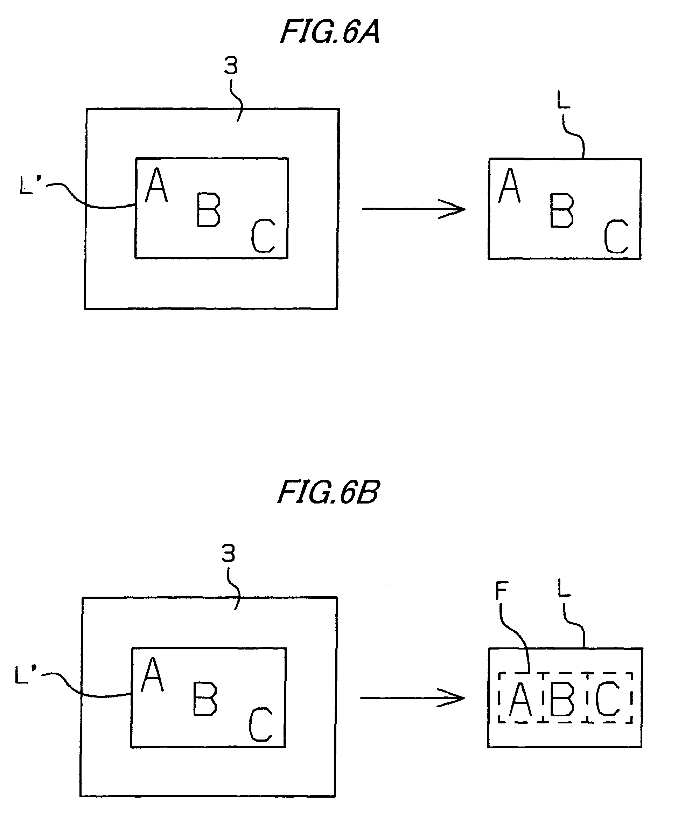

Figs. 6A and 6B are views for explaining the conventional label printer. Specifically, Fig. 6A is a view for explaining the case where printing is executed in a state of the label printer connected to the computer. Fig. 6B is a view for explaining the case where printing is executed in a state of the label printer not connected to the computer.

Where printing is executed in a state of the label printer connected to the computer, as described above, the editing application prepared in the computer is employed. Specifically, first, as seen from Fig. 6A (left side), data [ABC] edited by the editing application of the computer and arranged obliquely are previewed on a display 3 of the computer. In Figs. 6A and 6B, L' denotes a label on the display 3. Next, when a printing command is issued from an operator, in the computer, the data [ABC] are expanded into substantially the same format as that displayed on the display 3 of the computer (i.e. the format in which the data [ABC] are arranged obliquely) and the data expanded are sent to the label printer through a connecting cable. Next, as seen from Fig. 6A (right side), in the label printer, the data [ABC] are printed on the label L in substantially the same format as that displayed on the display 3 of the computer.

On the other hand, where printing is executed in a state of the label printer not connected to the computer, as described above, the label printer cannot receive the data from the computer through the connecting cable. Therefore, in this case, as seen from Fig. 6B (left side), when the data [ABC] are edited by the editing application of the computer, first, the data [ABC] edited are stored in a storage medium. Next, when printing should be executed, the storage medium is set in the label printer and the data stored in the storage medium are read out. However, the conventional label printer does not have a data expanding function possessed by the editing application of the computer. Therefore, in the conventional label printer, the data [ABC] read out from the storage medium cannot be expanded into substantially the same format as that displayed on the display 3 of the computer (i.e. the format in which the data [ABC] are arranged obliquely). As a result, in the conventional computer, where the computer cannot be connected to the label printer, the data [ABC] cannot be printed on the label L in substantially the same format as that displayed on the display 3 of the computer. Thus, as seen from Fig. 6B (right side), the data [ABC] will be printed on the label L in a limited format in which A, B and C are arranged horizontally in a line within a prescribed frame F.

### Disclosure of the Invention:

An object of this invention is to provide a label printer capable of printing data on a label in substantially the same format as that displayed on a display of a computer even in a place where the computer cannot be connected to the label printer, and capable of printing the data expanded at a high speed on the label in a place where the computer can be connected to the label printer.

In order to attain the above object, in accordance with the first aspect of an embodiment of this invention, there is provided a label printer wherein a first editing application is prepared in a label printer in order to expand data into substantially the same format as that displayed on a display of a computer and print the expanded data on a label even where the computer is not connected to the label printer, and wherein if the computer is connected to the label printer, a second editing application prepared in the computer is employed in order to expand the data into substantially the format as that displayed on the display of the computer and print the data expanded on the label, whereas if the computer is not connected to the label printer, the first editing application is employed in order to expand the data into substantially the format as that displayed on the display of the computer and print the data expanded on the label.

In accordance with the second aspect of the embodiment of this invention, in the label printer according to the first aspect, the first editing application includes a rewriting unit.

Further, in accordance with the third aspect of the embodiment of this invention, the label printer according to the first or second aspect includes a clock unit, and where the first editing application is employed in order to expand the data into substantially the same format as that displayed on the display of the computer and print the data expanded on the label, a date when printing is executed is printed on the label.

In the label printer according to the first aspect, where the computer is not connected to the label printer, a first editing application prepared in a computer is employed in order to expand data into substantially the same format as that displayed on a display of a computer and print the data expanded on a label. Thus, even in a place where the computer cannot be connected to the label printer, such as a site where there is a thing on which the label is pasted, the data can be printed on the label in substantially the same format as that displayed on the display of the computer. More specifically, for example, image data (logotype, lines, etc.) are expanded into bit map data in the label printer. Further, in the case of the data in a text format, when the text information such as text, character size, character type, etc. are sent to the label printer through a storage medium from the computer, and in the label printer, the data are expanded into a bit map font. In the label printer, the bit map font created from the text information is pasted on the bit map data thereby to form output data.

On the other hand, where the computer is connected to the label printer, the second editing application is employed in order to expand the data into substantially the same format as that displayed on the display of the computer and print the data expanded on the label. Namely, where the computer is connected to the label printer, the first editing application prepared in the label printer is not employed, but the second editing application having a relatively higher processing speed is employed in order to expand the data. Thus, in the place where the computer can be connected to the label printer, the data expanded at a higher speed than when the data are expanded using the first editing applicationprepared in the label printer can be printed on the label. Specifically, for example, the image data (logotype, lines, etc.) are expanded into the bit map data in the computer. Further, in the data in the text format, the data are expanded into e.g. True Type font in the computer.

In the label printer according to the second aspect, the first editing application prepared in the label printer included a rewriting unit. Thus, even in a place where the computer cannot be connected to the label printer, such as a site where there is a thing on which the label is pasted, the data rewritten from the data displayed on the display of the computer can be printed on the label. Specifically, in the label printer, the object such as text, bar code and date can be edited.

In the label printer according to the third aspect, where the first application prepared in the label printer is employed in order to expand the data into substantially the same format as that displayed on the display of the computer and print the data expanded on the label, the date when printing is executed is printed on the label. Thus, if the date when the data to be printed were created in the computer is different from the date when the data to be printed are printed by the label printer, not the date when the data to be printed were created by the computer but the date when printing is executed can be printed on the label. Preferably, the date when printing is executed, such as the date of manufacture of the thing on which the label is pasted, is acquired from the built-in clock of the label printer and printed on the label. Further, preferably, where the second editing application prepared in the computer is employed in order to expand the data into substantially the same format as that displayed on the display of the computer and print the data expanded on the label, the date when the data to be printed were created by the computer is acquired from the built-in clock of the computer and printed on the label.

### Brief description of the drawings:

[Fig. 1] Fig. 1 is a view for explaining the using manner of a first embodiment of the label printer according to this invention.
[Fig. 2A] Fig. 2A is a view for explaining the label printer according to the first embodiment, which shows the printing status in a state of a label printer connected to a computer.
[Fig. 2B] Fig. 2B is a view for explaining the label printer according to the first embodiment, which shows the printing status in a state of a label printer not connected to a computer.
[Fig. 3] Fig. 3 is a view for explaining the label printer according to a second embodiment.
[Fig. 4] Fig. 4 is a view for explaining the label printer according to a third embodiment.

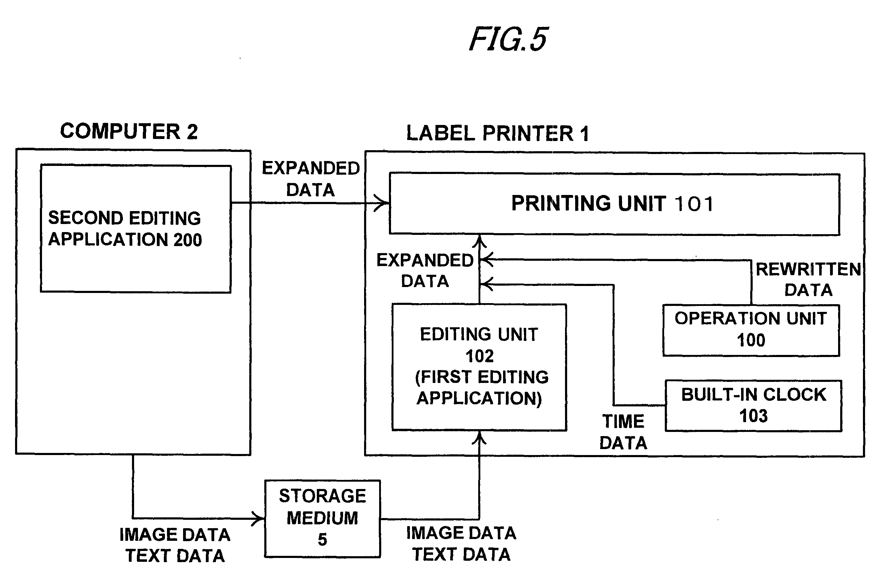

[Fig. 5] Fig. 5 is a view for explaining the label printers according the first to fourth embodiments of this application.
[Fig. 6A] Fig. 6A is a view for explaining a conventional label printer, which shows the printing status in a state of a label printer connected to a computer.
[Fig. 6B] Fig. 6B is a view for explaining a conventional label printer, which shows the printing status in a state of a label printer not connected to a computer.

### Description of Reference Numerals and Signs

Reference numeral 1 denotes a label printer; 2 a computer; 3 a display; 4 a connecting cable; 5 a storage medium; L a label; 100 a operation unit; 101 a printing unit; 102 an editing unit (first editing application); 103 a built-in clock (clock function); and 200 a second editing application.

### Best Mode for Carrying Out the Invention:

Embodiments of the invention will be described with reference to the accompanying drawings.

### <FIRST EMBODIMENTS>

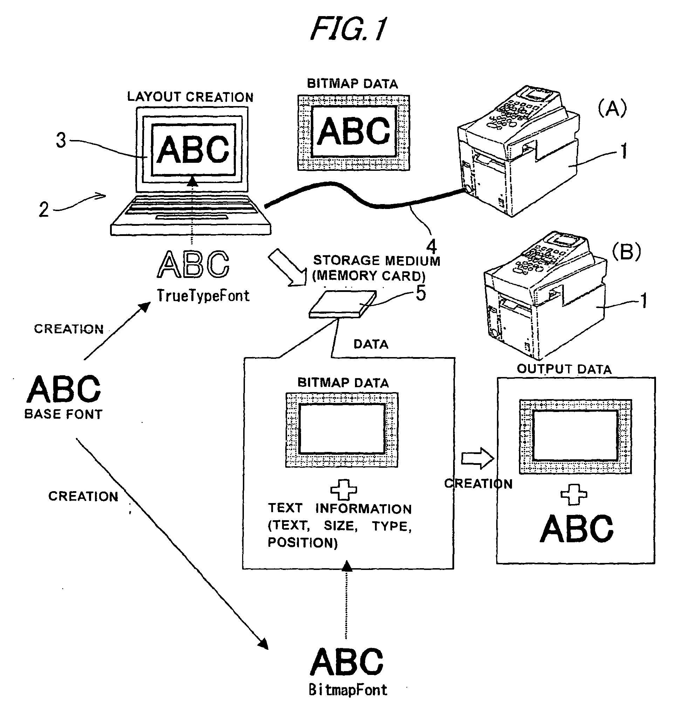

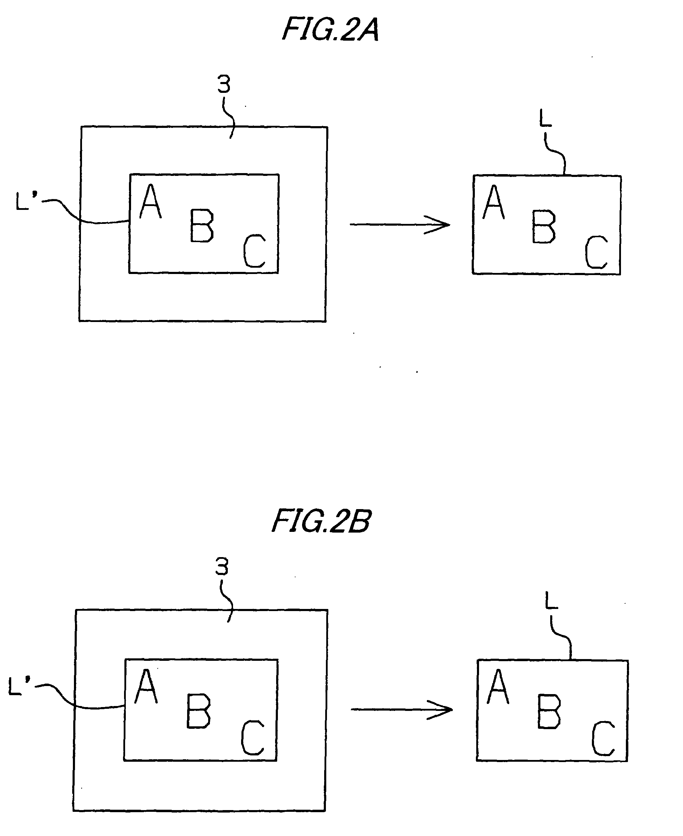

A first embodiment of the label printer according to this invention will be explained below. Fig. 1 is a view for explaining the using manner of a first embodiment of the label printer according to this invention. Figs. 2A and 2B are views for explaining the label printer according to the first embodiment. Specifically, Fig. 2A is a view for explaining the case where printing is executed in a state of the label printer connected to a computer. Fig. 2B is a view for explaining the case where printing is executed in a state of the label printer not connected to the computer. In Figs. 1, 2A and 2B, reference numeral 1 denotes a label printer of the first embodiment; 2 a computer connectable to the label printer 1; 4 a connecting cable for connecting the label printer 1 and the computer 2 to each other; and 5 a storage medium. It should be noted that labels L are housed in the label printer 1 in a state pasted on a roll paper in a reel shape, and if the label L is used up, new labels can be supplemented.

In the label printer 1 according to the first embodiment, as seen from (A), where printing is executed in a state connected to the computer 2, the editing application (second editing application 200) prepared in the computer 2 is employed. Specifically, first, as seen from Fig. 2A (left side), data [ABC] edited by the editing application of the computer 2 and arranged obliquely are displayed on the display 3 of the computer 2. Next, when a printing command is issued through the keyboard of the computer 2 by an operator, in the computer 2, the data [ABC] are expanded into substantially the same format as that displayed on the display 3 of the computer 2 (i.e. the format in which the data [ABC] are arranged obliquely) and the data thus expanded are sent to the label printer 1 through the connecting cable 4. Then, a printing unit 101 of the label printer 1 operates. Thus, as seen from Fig. 2A (right side), the data [ABC] are printed on the label L in substantially the same format as displayed on the display 3 of the computer 2 (see the left side in Fig. 2A).

On the other hand, as seen from (B) in Fig. 1, where printing is executed in a state of the label printer 1 not connected to the computer 2, the label printer 1 cannot receive the data from the computer 2 through the connecting cable 4. Therefore, as seen from Fig. 2B (left side), when the data [ABC] are edited by the editing application of the computer 2, first, as seen from Fig. 1, the data [ABC] edited are stored in a storage medium 5. Next, when printing should be executed, the storage medium 5 is set in the label printer 1 and the data [ABC] stored in the storage medium 5 are read out. (Incidentally, the storage medium 5 may be not a removable medium (e.g. memory card, FD, CD and DVD) but may be a storage medium (e.g. hard disk) incorporated in the label printer 1. In this case, the data [ABC] edited by the computer 2 are stored in the storage medium in the state of the label printer 1 connected to the computer 2. Thereafter, connection between the label printer 1 and the computer 2 is cancelled and so the label printer 1 can be carried).

Unlike the conventional label printer, in the label printer 1 according to the first embodiment, the editing application having such a data expanding function as possessed by the editing application of the computer 2 (first editing application, i.e. editing unit 102). Namely, in the label printer 1 according to the first embodiment, independently of the editing application of the computer 2, prepared is the editing application capable of expanding the data into substantially the same format as that displayed on the display 3 of the computer 2 and printing the data thus expanded on the label L even where the computer 2 is not connected to the label printer 1.

Therefore, as described above, when the data [ABC] are read out from the storage medium 5 set in the label printer 1, the editing application of the label printer 1 is employed. Thus, the data [ABC] read out from the storage medium 5 are expanded into substantially the same format as that displayed on the display 3 of the computer 2 (see Fig. 2B (left side)), and as seen from Fig. 2B (right side), the data expanded [ABC] are printed on the label L by the printing unit 101.

In this way, according to the label printer 1 according to the first embodiment, even in a place where the computer 2 cannot be connected to the label printer 1, such as a site where there is a thing on which the label L is pasted, the data can be printed on the label L in substantially the same format (see Fig. 2B (right side)) as the format displayed on the display 3 of the computer 2 (see Fig. 2B (left side)).

More specifically, as seen from Fig. 1, when e.g. image data (logotype, lines, etc.) are sent to the label printer 1 through the storage medium 5 from the computer 2, in the label printer 1, the image data are expanded into bit map data by the editing application of the label printer 1. Further, in the case of the data in a text format, when the text information such as text, character size, character type, position, etc. are sent to the label printer 1 through the storage medium 5 from the computer 2, in the label printer 1, the data are expanded into a bit map font by the editing application of the label printer 1. Further, in the label printer 1, the bit map font created from the text information is pasted on the bit map data thereby to form output data.

In the label printer 1 according to this first embodiment, where printing is executed in the state of the label printer 1 connected to the computer 2, the editing application prepared in the computer 2 is employed. Thus, the data [ABC] are expanded into substantially the same format (see Fig. 2A (right side)) as that displayed on the display 3 of the computer 2 (see Fig. 2A (left side)) and the data [ABC] expanded are printed on the label L. Namely, where the computer 2 is connected to the label printer 1, the editing application of the label printer 1 is not employed, but the editing application of the computer 2 having relatively higher processing speed is employed in order to expand the data [ABC]. Thus, in the place where the computer 2 can be connected to the label printer 1, the data [ABC] expanded at a higher speed than when the data [ABC] are expanded using the editing application of the label printer 1 can be printed on the label L. Specifically, for example, the image data (logotype, lines, etc.) are expanded into the bit map data in the computer 2. Further, in the data in the text format, the data are expanded into e.g. True Type font in the computer 2.

### <SECOND EMBODIMENT>

An explanation will be given of a second embodiment of the label printer according to this invention. The label printer according the second embodiment is configured in the same manner as that of the above label printer according to the first embodiment except the matter described below. Therefore, the same effect as that of the label printer according to the first embodiment can be obtained except the matter described below.

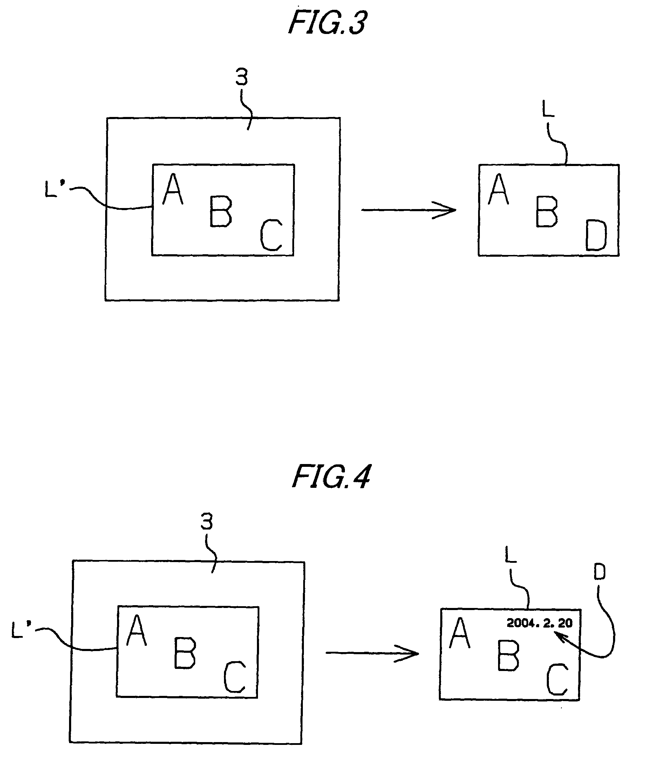

In the label printer according to the second embodiment, the editing application of the above label printer 1 has a rewriting function. Fig. 3 is a view for explaining the label printer according to the second embodiment. Specifically, Fig. 3 is a view for explaining the case where printing is executed in the state of the label printer not connected to the computer.

In the label printer according to the second embodiment, as seen from (B) in Fig. 1, where printing is executed in a state of the label printer 1 not connected to the computer 2, as seen from Fig. 3 (left side), when the data [ABC] are edited by the editing application of the computer 2, first, the data [ABC] edited are stored in a storage medium 5. Next, when printing should be executed, the storage medium 5 is set in the label printer 1 and the data [ABC] stored in the storage medium 5 are read out.

In the label printer according to the second embodiment, when the data [ABC] are read out from the storage medium 5 set in the label printer 1, the data [ABC] can be rewritten into e.g. data [ABD] by the rewriting function of the editing application of the label printer 1. Specifically, when the operator rewrites [C] into [D] through the operation unit 100 of the label printer 1, the data [ABC] can be rewritten into the data [ABD]. Thus, the data [ABD] thus rewritten are expanded into substantially the same format as that displayed on the display 3 of the computer 2 (Fig. 3 (left side)), and the data [ABD] expanded, as seen from Fig. 3 (right side), are printed on the label L.

In this way, according to the label printer according to the second embodiment, even in a place where the computer 2 cannot be connected to the label printer 1, such as a site where there is a thing on which the label is pasted, the data [ABD] different from the data [ABC] displayed on the display 3 of the computer 2 can be printed on the label L. Specifically, in the label printer 1, the object such as text, bar code and date can be edited.

### <THIRD EMBODIMENT>

An explanation will be given of a third embodiment of the label printer according to this invention. The label printer according the third embodiment is configured in the same manner as that of the above label printer according to the first embodiment except the matter described below. Therefore, the same effect as that of the label printer according to the first embodiment can be obtained except the matter described below.

The label printer according to the third embodiment incorporates a built-in clock 103. Thus, by using the editing application of the label printer 1, when the data [ABC] expanded into substantially the same format as that displayed on the display 3 of the computer 2 are displayed on the label L, the date when printing is executed (e.g. '2004.2.20') is printed on the label L.

Fig. 4 is a view for explaining the label printer according to the third embodiment. Specifically, Fig. 4 is a view for explaining the case where printing is executed in the state of the label printer not connected to the computer.

In the label printer according to the third embodiment, as seen from (B) in Fig. 1, where printing is executed in a state of the label printer 1 not connected to the computer 2, as seen from Fig. 4 (left side), when the data [ABC] are edited by the editing application of the computer 2, first, the data [ABC] edited are stored in a storage medium 5. Next, when printing should be executed, the storage medium 5 is set in the label printer 1 and the data [ABC] stored in the storage medium 5 are read out.

Next, by using the editing application of the label printer 1, the data [ABC] read out from the storage medium 5 are expanded into substantially the same format as that displayed on the display 3 of the computer 2 (see Fig. 4 (left side)).

In the label printer according to the third embodiment, where the data [ABC] expanded into substantially the same format (see Fig. 4 (left side)) as that displayed on the display 3 of the computer 2 are displayed on the label L, as seen from Fig. 4 (right side), in addition to the data [ABC] expanded, the date '2004.2.20' when printing is executed is printed on the label L.

In this way, in accordance with the label printer according to the third embodiment, if the date (e.g. '2004.2.15') when the data [ABC] to be printed were created in the computer 2 is different from the date ('2004.2.20) when the data [ABC] to be printed are printed on the label L by the label printer 1, not the date '2004.2.15' when the data [ABC] to be printed were created by the computer 2 but the date '2004.2.20' when printing is executed can be printed on the label L.

More specifically, in the label printer according to the third embodiment, the date when printing is executed, such as the date of manufacture of the thing on which the label L is pasted, is acquired from the built-in clock of the label printer 1 and printed on the label. Further, as seen from Fig. 1(A), where the data expanded into substantially the same format as that displayed on the display 3 of the computer 2 by using the editing application of the computer 2 are printed on the label L, the date when the data to be printed were created by the computer 2 is acquired from the built-in clock 103 of the computer 2 and printed on the label L.

### <FOURTH EMBODIMENT>

In the fourth embodiment, the above second and third embodiments can be appropriately combined.

This invention has been explained hitherto in detail and referring to specific embodiments. It is apparent to those skilled in the art that this invention can be changed or modified in various manners without departing from the spirit and scope of the invention.

This application is based on Japanese Patent Application (Patent Application No. 2004-048822) filed on February 24, 2004, and contents of which are incorporated herein by reference.

### Industrial Applicability:

In accordance with the embodiments of this invention, the data can be printed on the label in substantially the same format as that displayed on a display of a computer even in a place where the computer cannot be connected to the label printer. Further, even where the label printer has a function of expanding the data into substantially the same format as that displayed on the display of the computer, if the label printer is connected to the computer, the data can be expanded on the side of the computer so that the label printing can be realized at a high speed.

## Claims

1. A label printer comprising:
an editing unit that expands data edited by a computer and stored in a data storage medium into substantially the same format as that displayed on a display of the computer; and
a printing unit that prints the data on a label according to a format expanded by the computer or format expanded by the editing unit.

2. The label printer according to claim 1, wherein the format substantially the same as that displayed on the display of the computer comprises bit map data.

3. The label printer according to claim 2, wherein the format substantially the same as that displayed on the display of the computer further comprises a bit map font.

4. The label printer according to claim 1, wherein the data stored in the data storage medium comprises image data; and
the image data are expanded into bit map data by the editing unit.

5. The label printer according to claim 4, wherein the data stored in the data storage medium further comprises text data; and
the text data are expanded into a bit map font by the editing unit.

6. The label printer according to claim 1,
when the computer is connected to the label printer, the printing unit executes printing according to the format expanded in the computer, and
when the computer is not connected to the label printer, the printing unit executes printing according to the format expanded by the editing unit.

7. The label printer according to claim 1, further comprising a operation unit that rewriting the data stored in the data storage medium.

8. The label printer according to claim 7, wherein an object including at least one of a text, bar code and date is edited by an operation of the operation unit.

9. The label printer according to claim 1, further comprising a clock function, wherein the printing unit executes printing on the label with an addition of the data when printing is executed.

10. The label printer according to claim 1, wherein the label is pasted on a roll paper and housed in the label printer.

11. A label printer, comprising:
a first editing application that expands data into substantially the same format as that displayed on a display of a computer and prints the expanded data on a label even when the computer is not connected to the label printer,
when the computer is connected to the label printer, the data is expanded into substantially the same format as that displayed on the display of the computer and the expanded data is printed on the label by using a second editing application in the computer,
when the computer is not connected to the label printer, the data is expanded into substantially the same format as that displayed on the display of the computer and the expanded data is printed on the label by using the first editing application in the computer.

12. The label printer according to claim 11, wherein the first editing application comprises a rewriting unit.

13. The label printer according to claim 11, further comprising a clock unit, when first editing application is employed in order to expand the data into substantially the same format as that displayed on the display of the computer and print the expanded data on the label, a date when printing is executed is printed on the label.
